# EUROPÄISCHE PATENTANMELDUNG

(11) **EP 4 516 468 A1**
(43) Veröffentlichungstag der Anmeldung: **05.03.2025**
(21) Anmeldenummer: 24196474.1
(22) Anmeldetag: 26.08.2024
(51) Int. Cl.: B25J 21/00

(54) **VORRICHTUNG ZUR HANDHABUNG VON BEHÄLTERN**

(30) Priorität: 30.08.2023 DE 102023123373; 26.09.2023 DE 102023126131
(71) Anmelder: Hecht Technologie GmbH, 85276 Pfaffenhofen (DE)
(72) Erfinder: Schwaiger, Thomas, 85276 Pfaffenhofen/Ilm (DE)
(74) Vertreter: Kilian Kilian & Partner mbB

(57) **Zusammenfassung**

Die Erfindung betrifft eine Vorrichtung (1) zur Handhabung von Behältern (F) aufweisend:
eine Robotereinrichtung (2), die eingerichtet ist, (i) ein an/in einem Behälter (F) vorgesehenes Öffnungselement (6) derart zu bedienen, dass die Robotereinrichtung (2) über das Öffnungselement (6) Zugang in einen Innenraum des Behälters (F) hat, und (ii) den Behälter (F) über das Öffnungselement (6) anschließend zu befüllen und/oder zu entleeren.

## Beschreibung

Die Erfindung betrifft eine Vorrichtung zur Handhabung von Behältern, insbesondere zur Entleerung von Behältern, die ein Schüttgut enthalten, und/oder zur Befüllung der Behälter mit einem Schüttgut. Außerdem betrifft die Erfindung ein entsprechendes Zubehör.

Die Patentveröffentlichung WO 2015/104428 A1 beschreibt eine Entleerungseinrichtung, die insbesondere zur Entleerung von Fässern dient.

Die gezeigte Entleerungseinrichtung beinhaltet einen Isolator, an den ein zu entleerendes Fass angeschlossen werden kann. Innerhalb des Isolators befindet sich eine Förderleitung mit einem hieran angeschlossenen Saugrohr.

Ein Anwender kann das Saugrohr über Handschuheingriffe innerhalb des Isolators manuell bedienen und in das angeschlossene Fass einführen, wobei eine außerhalb des Isolators angeordnete Pumpe einen solchen Unterdruck in der Förderleitung bzw. dem Saugrohr erzeugt, dass der Anwender das Fass leersaugen kann.

Der Anschluss des jeweiligen Fasses erfolgt gemäß dem genannten Stand der Technik mittels O-Ringen und Blähdichtungen, wobei jeweilige Schritte durch den Anwender manuell durchzuführen sind. Auch erfolgt die eigentliche Entleerung manuell durch den Anwender. Beide Tätigkeiten sind zeitintensiv, umständlich und damit kostenintensiv.

Vor diesem Hintergrund ist es Aufgabe der Erfindung, eine Vorrichtung und entsprechendes Zubehör zu schaffen, die eine vereinfachte Handhabung von Behältern zulassen.

Zumindest ist es Aufgabe der Erfindung, eine Alternative zum Stand der Technik zu schaffen.

Diese Aufgaben löst eine erfindungsgemäße Vorrichtung gemäß Patentanspruch 1 und ein Zubehör gemäß Patentanspruch 8.

*Die erfindungsgemäße dient insbesondere zur Entleerung von Behältern, die ein Schüttgut enthalten, und*/*oder zur Befüllung der Behälter mit einem Schüttgut, wobei die Vorrichtung aufweist:*
*eine Robotereinrichtung, die eingerichtet ist, (i) ein an*/*in dem Behälter vorgesehenes Öffnungselement derart zu bedienen, dass die Robotereinrichtung über das Öffnungselement Zugang in einen Innenraum des Behälters hat, und (ii) den Behälter über das Öffnungselement anschließend zumindest teilweise zu befüllen und*/*oder zumindest teilweise zu entleeren.*

Die Robotereinrichtung ist insbesondere ein Industrieroboter mit einem Roboterarm (Manipulator), einem Werkzeug und/oder Greifer (Effektor) und einer Steuerung.

Der Roboterarm ist bevorzugt so aufgebaut, dass er das Werkzeug und/oder den Greifer im dreidimensionalen Raum bewegen und einsetzen kann.

Die Steuerung ist bevorzugt derart eingerichtet, dass die gewünschten Bewegungen des Roboterarms über ein Teach-In-Verfahren oder Playback-Verfahren programmiert werden können. Ersteres beinhaltet das Abfahren der gewünschten Positionen unter Verwendung einer Konsole, wohingegen letzteres darin besteht, dass der Anwender den Roboterarm direkt an die gewünschten Positionen führt. Die gemäß beiden Verfahren erhaltenen Koordinaten speichert die Steuerung, sodass diese für eine weitgehende Programmierung zur Verfügung stehen.

Alternativ kann die Robotereinrichtung mittels einer Offline-Programmierung programmiert werden.

Die Robotereinrichtung ist beispielsweise derart eingerichtet, dass sie mittels des Effektors eine Förderleitung, die für das Befüllen und/oder das Entleeren des Behälters dient, über das Öffnungselement in den Behälter einführen und wieder herausziehen kann. Das Schüttgut wird über die Förderleitung bevorzugt pneumatisch aus dem Behälter gesaugt (Entleerung) oder in den Behälter geleitet (Befüllung). Alternativ kann in der Förderleitung eine Förderschnecke, die für den Transport des Schüttgutes sorgt, angeordnet sein.

*Bevorzugt weist die erfindungsgemäße Vorrichtung weiterhin auf:*
*einen Isolator, in dem die Robotereinrichtung angeordnet ist und mit dem der Behälter über einen Andockabschnitt derart verbindbar ist, dass das Öffnungselement für die Robotereinrichtung zugänglich ist.*

Der Isolator sorgt für eine Abschottung der Robotereinrichtung, sodass das Entleeren und/oder Befüllen des Behälters kontaminationsfrei erfolgt.

Kontaminationsfrei bedeutet, dass weder das Schüttgut aus dem Isolator austreten noch verunreinigende Partikel in den Isolator eintreten können. D.h. ein Anwender, der sich außerhalb des Isolators befindet, kann mit dem Schüttgut nicht in Berührung kommen, und zudem können keine außerhalb des Isolators vorliegenden Verunreinigungspartikel in den Isolator eintreten und das Schüttgut verunreinigen.

*Bevorzugt weist der Andockabschnitt auf:*
*einen rigiden Plattenabschnitt, an den ein rigider Rand des Behälters bestimmungsgemäß gedrückt wird, und*
*einen über ein, bevorzugt flexibles, Verbindungselement mit dem Plattenabschnitt verbundenen Durchgangsabschnitt, der mit dem Öffnungselement, das bestimmungsgemäß an einem flexiblen Innenbehältnis*
*des Behälters befestigt ist, lösbar verbindbar ist.*

Der Plattenabschnitt beinhaltet insbesondere Dichtmittel, die bei dem Andrücken so mit dem rigiden Rand des Behälters wechselwirken, dass das Öffnungselement vollständig eingeschlossen ist. Der Behälter ist insbesondere ein Fass, in dem sich das flexible Innenbehältnis, beispielsweise ein Sack, befindet. Bei bestimmungsgemäßem Andocken des Fasses wird zuerst sein Deckel entfernt und der die entstehende Öffnung definierende Rand durch Anheben des Fasses an die Dichtmittel gedrückt.

Bevorzugt vor dem Anheben/Andrücken des rigiden Randes wird das Öffnungselement an dem flexiblen Innenbehältnis befestigt. Um das Öffnungselement mit dem Durchgangsabschnitt anschließend zu verbinden, wird das Öffnungselement beispielsweise manuell oder automatisiert in den Durchgangsabschnitt gesteckt und der Behälter letztendlich angehoben.

Alternativ kann die Robotereinrichtung eingerichtet sein, den Durchgangsabschnitt innerhalb des Isolators zu greifen und zu versetzen, um nach dem Andrücken des rigiden Randes an die Dichtmittel den Durchgangsabschnitt mit dem Öffnungselement zu verbinden, beispielsweise mit diesem zusammenzustecken.

Das Öffnungselement hat bevorzugt einen Rahmenabschnitt, der bestimmungsgemäß an dem flexiblen Innenbehältnis befestigt wird, und einen den Rahmenabschnitt verschließenden Deckelabschnitt. Nach Verbinden des Öffnungselements mit dem Durchgangsabschnitt hält der Durchgangsabschnitt den Rahmenabschnitt lösbar.

Die Befestigung des Rahmenabschnittes an dem flexiblen Behältnis erfolgt beispielsweise mit einer Klebefolie, die an dem Rahmenabschnitt befestigt ist. Alternativ kann der Rahmenabschnitt an dem flexiblen Behältnis angeschweißt werden/sein.

Die Klebefolie überspannt bevorzugt einen durch den Rahmenabschnitt definierten Durchgangskanal. Zudem bevorzugt ist die Klebefolie radial zur Achse des Durchgangskanales größer als der Rahmenabschnitt, sodass die Klebefolie radial nach außen übersteht.

Bei Befestigung des Rahmenabschnittes an dem flexiblen Innenbehältnis drückt der Anwender die Klebefolie an seine Außenoberfläche, wobei der überstehende Teil der Klebefolie sich flexibel an die Außenoberfläche des Innenbehältnisses anlegt.

Der Deckelabschnitt ist mit dem Rahmenabschnitt form- und/oder kraftschlüssig verbunden, sodass die Robotereinrichtung den Deckelabschnitt zur Herstellung des Zugangs betätigen bzw. lösen kann.

Beispielsweise ist der Deckelabschnitt in den Rahmenabschnitt eingerastet oder greift mit diesem kraftschlüssig ineinander. Alternativ oder zusätzlich können Rahmenabschnitt und Deckelabschnitt über einen Bajonettverschluss aneinander lösbar befestigt sein.

Der Verbindungsabschnitt verbindet den Plattenabschnitt und den Durchgangsabschnitt. Der Verbindungsabschnitt kann starr/rigide oder flexibel ausgebildet sein.

Im letzteren Fall ist der Verbindungsabschnitt bevorzugt derart flexibel, dass der Durchgangsabschnitt relativ zu dem Plattenabschnitt - durch den Anwender manuell oder durch die Robotereinrichtung betätigt - im Raum versetzbar ist. Diese Flexibilität dient dazu, Spiel zu haben, um den Durchgangsabschnitt mit dem Öffnungselement verbinden zu können, insbesondere dazu, verschiedene Füllhöhen des flexiblen Innenbehältnisses oder einen Versatz zwischen Durchgangsabschnitt und Öffnungselement ausgleichen zu können.

Das flexible Verbindungselement ist beispielsweise rohr- oder trichterförmig ausgebildet und verläuft koaxial zu dem Durchgangskanal des Rahmenabschnitts.

*Bevorzugt weist die erläuterte Vorrichtung weiterhin auf:*
*einen Verschluss, der den Durchgangsabschnitt verschließt und einen Angreifabschnitt besitzt, wobei*
*die Robotereinrichtung eingerichtet ist, den Verschluss an dem Angreifabschnitt zum Öffnen des Durchgangsabschnittes zu greifen.*

Der Verschluss verschließt den Durchgangsabschnitt derart, dass die Robotereinrichtung in dem Isolator vollständig eingeschlossen ist und Restmengen des Schüttgutes durch den Durchgangsabschnitt hindurch nicht nach außen austreten können.

Der Verschluss verschließt den Durchgangsabschnitt insbesondere in der Situation, in der kein Behälter angedockt ist.

Der Angreifabschnitt ist beispielsweise ein Zapfen, der an dem Verschluss in einen Innenraum des Isolators vorsteht und an dem die Robotereinrichtung den Verschluss greifen kann.

Bevorzugt besitzt der Verschluss solche Strukturen, die bei Andocken des Behälters mit dem Deckelabschnitt des Öffnungselementes ineinandergreifen.

Das Ineinandergreifen des Verschlusses mit dem Deckelabschnitt führt dazu, dass die Robotereinrichtung, wenn sie den Verschluss zum Öffnen greift und entfernt, gleichzeitig den Deckelabschnitt des Öffnungselementes betätigt bzw. mitentfernt und so den Zugang in den Innenraum des Behälters bzw. des Innenbehältnisses erlangt.

Die Strukturen des Verschlusses sind beispielsweise dadurch gebildet, dass der Zapfen einen axialen Hohlraum aufweist und der Deckelabschnitt einen korrespondierenden Steckzapfen besitzt, der bei Andocken des Behälters in den Hohlraum des Zapfens gesteckt wird und dort kraftschlüssig sitzt.

*Bevorzugt ist die Vorrichtung derart weitergebildet, dass der Durchgangsabschnitt eine Dichteinrichtung besitzt, die eingerichtet ist, den Verschluss und das Öffnungselement unabhängig voneinander lösbar zu halten, wobei*
*die Robotereinrichtung bevorzugt eingerichtet ist, nachdem der Durchgangsabschnitt mit dem Öffnungselement über die Dichteinrichtung verbunden ist, den Verschluss und das Öffnungselement derart zu bedienen, dass die Robotereinrichtung über das Öffnungselement den Zugang in den Innenraum innerhalb des flexiblen Innenbehältnisses des Behälters hat.*

Die unabhängige Halterung des Verschlusses und des Öffnungselementes erlaubt, dass der Verschluss örtlich verbleibt, während ein Wechsel des Behälters stattfindet.

*Bevorzugt beinhaltet die Dichteinrichtung eine Blähdichtung und eine weitere Dichtung, die bevorzugt eine weitere Blähdichtung ist und in dem Durchgangsabschnitt versetzt zu der Blähdichtung angeordnet ist, wobei*
*die Blähdichtung eingerichtet ist, den Verschluss lösbar zu halten, und die weitere Dichtung eingerichtet ist, das Öffnungselement zum Verbinden mit dem Behälter lösbar zu halten.*

Die weitere Dichtung hält das Öffnungselement, indem sie insbesondere auf den Rahmenabschnitt wirkt, wobei sich der Deckelabschnitt nach oder zusammen mit dem Verschluss entfernen lässt.

Die Erfindung betrifft zusätzlich ein Zubehör für eine Vorrichtung, wie sie im Vorhergehenden beschrieben wurde, wobei das Zubehör den Verschluss und das Öffnungselement beinhaltet.

Im Folgenden wird eine bevorzugte Ausführungsform der Erfindung unter Bezug auf die beigefügten Figuren erläutert.
**Figuren 1A** **und** **1B** zeigen Schnittansichten einer erfindungsgemäßen Vorrichtung, die zur zumindest teilweisen Befüllung und/oder Entleerung eines Fasses dient und sich in einer Ausgangssituation befindet, wobei Figur 1B den in Figur 1A gezeigten vergrößerten Ausschnitt 1A zeigt.
**Figuren 2A** **und** **2B** zeigen Schnittansichten der erfindungsgemäßen Vorrichtung, die sich in einer Situation befindet, in der ein Öffnungselement des Behälters mit einem Durchgangsabschnitt verbunden ist, wobei Figur 2B den in Figur 2A gezeigten vergrößerten Ausschnitt 2A zeigt.
**Figuren 3A** **und** **3B** zeigen Schnittansichten der erfindungsgemäßen Vorrichtung, wobei eine Robotereinrichtung einen Verschluss und einen Deckelabschnitt entfernt und Figur 3B den in Figur 3A gezeigten vergrößerten Ausschnitt 3A zeigt.
**Figuren 4A** **und** **4B** zeigen Schnittansichten der erfindungsgemäßen Vorrichtung, wobei die Robotereinrichtung ein Schneidewerkzeug einsetzt und Figur 4B den in Figur 4A gezeigten vergrößerten Ausschnitt 4A zeigt.
**Figuren 5A** **und** **5B** zeigen Schnittansichten der erfindungsgemäßen Vorrichtung, wobei die Robotereinrichtung eine Förderleitung greift und einsetzt, um das angedockte Fass zu entleeren.
**Figuren 6A** **und** **6B** zeigen Ansichten der erfindungsgemäßen Vorrichtung, wobei die Robotereinrichtung nach Entleerung des Fasses den Durchgangsabschnitt mit einem Deckelabschnitt und einem Verschluss wieder verschlossen hat.

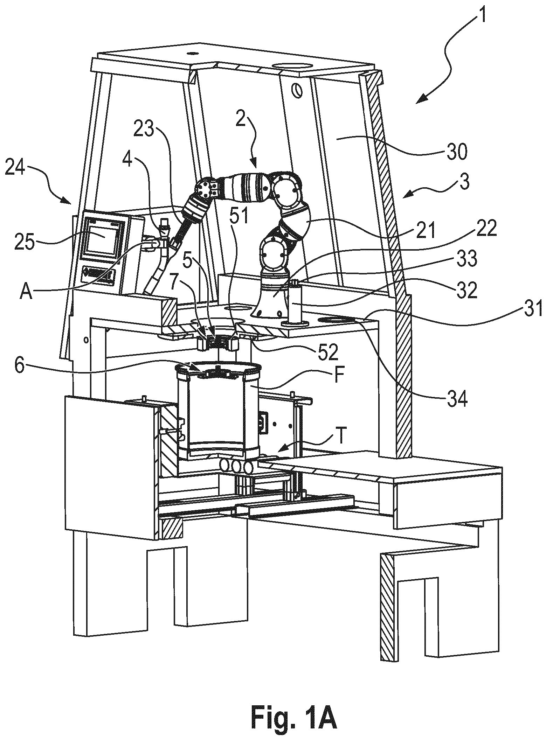

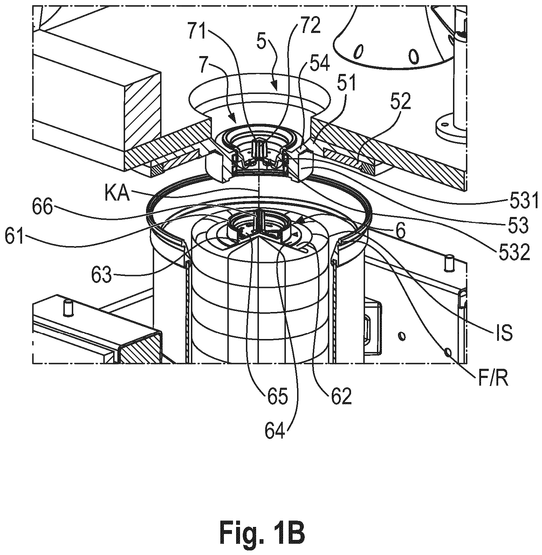

Figur 1 zeigt eine Ausführungsform einer erfindungsgemäßen Vorrichtung 1 zur Handhabung von Behältern. Die Vorrichtung 1 dient insbesondere zur Entleerung von Behältern, die ein Schüttgut enthalten, und/oder zur Befüllung der Behälter mit einem Schüttgut.

Die Behälter sind bevorzugt Fässer F, die ein zusätzliches Innenbehältnis, wie beispielsweise einen das Schüttgut umhüllenden Innensack, aufweisen.

Die Vorrichtung 1 beinhaltet bevorzugt eine Robotereinrichtung 2, die, wie es im Folgenden im Detail erläutert wird, ein Öffnungselement 6 betätigen kann, um Zugang in das Fass F bzw. in den Innensack zu erlangen.

Die Robotereinrichtung 2 beinhaltet einen Roboterarm 21 mit bevorzugt sechs Gelenken, um Bewegungen im Raum durchzuführen und einen Fuß 22, über den die gesamte Robotereinrichtung 2 an einer Tischoberfläche 31 eines im Folgenden noch erläuterten Isolators 3 befestigt ist.

An einem in Bezug auf den Fuß 22 distalen, freien Ende des Roboterarms 21 ist ein Greifer (Effektor) 23 befestigt, der dazu dient, unterschiedliche Elemente, wie es im Folgenden erläutert werden wird, zu greifen und für die Entleerung/Befüllung des Fasses F zu benutzen bzw. einzusetzen.

Zudem besitzt die Robotereinrichtung 2 eine Steuerung 24, die mit dem Roboterarm 21 und dem Greifer 23 elektrisch oder per Funk verbunden ist. Die Steuerung 24 ist eingerichtet, den Roboterarm 21 und den Greifer 23 zu steuern, um gewünschte Positionen anzufahren und entsprechende Tätigkeiten auszuführen. Auch lässt sich über die Steuerung 24 eine Programmierung des Roboterarms 21 und des Greifers 23 realisieren.

Die erfindungsgemäße Vorrichtung 1 weist bevorzugt den Isolator 3 auf, der vollständig geschlossen ist und einen abgeschotteten Innenraum 30 festlegt. Bevorzugt ist der Isolator 3 konstruktiv so aufgebaut, dass ein Anwender den abgeschotteten Innenraum 30 über Glasscheiben einsehen kann.

Der Fuß 22 der Robotereinrichtung 2 ist, wie bereits erwähnt, auf einer Tischoberfläche 31 des Isolators 3 befestigt. Zusätzlich ist innerhalb des Isolators 3 auf der Tischoberfläche 31 eine Werkzeughalterung 32 für ein Schneidwerkzeug 33 und eine Parkposition 34, die im Folgenden erläutert werden, ausgebildet.

Eine Förderleitung 4, die zur Entleerung und/oder Befüllung des Fasses F dient, ist in dem Innenraum 30 des Isolators 3 neben der Robotereinrichtung 2 angeordnet und in einer Aufhängung A eingehängt. Die Robotereinrichtung 2 befindet sich in einer solchen räumlichen Nähe zu der Aufhängung A, dass sie die Förderleitung 4 mit dem Greifer 23 fassen und zur Entleerung und/oder Befüllung des Fasses F einsetzen kann.

Eine pneumatische Förderanlage (nicht gezeigt) ist außerhalb des Isolators 3 angeordnet und über einen Anschluss an dem Isolator 3 mit der Förderleitung 4 verbunden. Die pneumatische Förderanlage ist eingerichtet, Schüttgut durch die Förderleitung 4 für die Entleerung und/oder Befüllung des Fasses 4 pneumatisch zu transportieren.

Die erfindungsgemäße Vorrichtung 1 beinhaltet bevorzugt zusätzlich eine Transporteinrichtung T, die unterhalb des Isolators 3 angeordnet ist. Die Transporteinrichtung T ist eingerichtet, das zu entleerende und/oder zu befüllende Fass F in eine gewünschte Andockposition zu bringen, in der es mit dem Isolator 3 verbunden werden kann. Insbesondere ist die Transporteinrichtung T bevorzugt eingerichtet, das Fass F unter den Isolator 3 zu transportieren und anschließend anzuheben.

Das Verbinden des Fasses mit dem Isolator 3 erfolgt bevorzugt über einen Andockabschnitt 5, der auf einer Unterseite des Isolators 3 auf einer der Tischoberfläche 31 abgewandten Seite angeordnet ist.

Der Andockabschnitt 5 und das darunter angeordnete Fass F sind in Figur 1B vergrößert dargestellt, wobei die entsprechenden Elemente unter Bezug auf diese Figur im Folgenden erläutert werden.

Der Andockabschnitt 5 beinhaltet einen rigiden Plattenabschnitt 51, an dem bevorzugt Dichtmittel 52 vorgesehen sind. Der Plattenabschnitt 51 und bevorzugt die entsprechenden Dichtmittel 52 umlaufen einen Durchgangsabschnitt 53 vollständig. Die Dichtmittel 52 sind bevorzugt aus einem Elastomer, beispielsweise Gummi gebildet.

Bei dem im Folgenden erläuterten Entleeren und/oder Befüllen des Fasses F, wird der obere Rand des Fasses F an die Dichtmittel 52 gedrückt.

Ein Verbindungselement 54 verbindet den genannten und im Folgenden erläuterten Durchgangsabschnitt 53 mit dem Plattenabschnitt 51. Das Verbindungselement 54 kann mit dem Plattenabschnitt 51 und/oder dem Durchgangsabschnitt 53, wie gezeigt, monolithisch ausgebildet oder ein gesondertes an den genannten Abschnitten befestigtes Element sein. Außerdem kann das Verbindungselement 54 aus einem flexiblen Material, beispielsweise einem Elastomer, oder aus einem rigiden/starren Material gebildet sein.

Das Verbindungselement 54 verläuft ausgehend von dem Plattenabschnitt 51 trichterförmig in Richtung des Fasses F, wobei der Durchgangsabschnitt 53 an dem in Bezug auf den Isolator 3 distalen Ende des Verbindungselementes 54 befestigt ist.

Ein erfindungsgemäßes Zubehör für die Vorrichtung 1 beinhaltet ein Öffnungselement 6, das bestimmungsgemäß an dem Innenbehältnis, dem Innensack IS, des Fasses F befestigt wird und zur Verbindung mit dem Durchgangsabschnitt 53 dient.

Das Öffnungselement 6 beinhaltet einen Rahmenabschnitt 61, der an dem Innensack IS befestigt wird. Diese Befestigung erfolgt bevorzugt über eine Klebefolie 62, die an dem Rahmenabschnitt 61 befestigt ist und die auf eine Außenoberfläche des Innensackes IS gedrückt wird. Alternativ kann der Rahmenabschnitt 61 an dem Innensack IS angeschweißt werden/sein. Der Rahmenabschnitt 61 definiert einen Durchgangskanal 63 mit einer Kanalachse KA, wobei die Klebefolie 62 den Durchgangskanal 63 bevorzugt vollständig überspannt und somit den Durchgangskanal 63 auf der dem Innensack IS zugewandten Seite vollständig verschließt.

Der Rahmenabschnitt 61 erstreckt sich axial zur Kanalachse KA rohrförmig (Hohlzylinder) und beinhaltet bevorzugt einen radial zur Kanalachse KA verlaufenden Flanschabschnitt 64, auf dessen dem Fass F zugewandten Seite die Klebefolie 62 befestigt ist. Bevorzugt steht die Klebefolie 62 radial zur Kanalachse KA über den Flanschabschnitt 64 radial über.

Um das Öffnungselement 6 an dem Innensack IS zu befestigen, drückt ein Anwender die Klebefolie 62 mit ihrer haftenden Seite manuell an die Außenoberfläche des Innensackes IS. Dieser Vorgang kann auch automatisiert erfolgen, indem beispielsweise ein externer Roboter das Öffnungselement 6 an dem Innensack IS befestigt (festklebt oder verschweißt). Ein unter Umständen vorher auf dem Rand R des Fasses F sitzender Deckel wird vorab entfernt. Das kann wiederum entweder manuell durch den Anwender oder, beispielsweise durch den externen Roboter, automatisiert erfolgen.

Das Öffnungselement 6 weist zusätzlich einen Deckelabschnitt 65 auf, der ein dem Isolator 3 bzw. dem Durchgangsabschnitt 53 zugewandtes Ende des Rahmenabschnitts 61 verschließt. Der Deckelabschnitt 65 hält an dem Rahmenabschnitt 61 bevorzugt kraftschlüssig und/oder formschlüssig.

Der Deckelabschnitt 65 beinhaltet auf seiner dem Durchgangsabschnitt 53 bzw. dem Isolator 3 zugewandten Seite einen Steckzapfen 66, der, wie im Folgenden erläutert, zur Verbindung mit dem Durchgangsabschnitt 53 bzw. dem Isolator 3 dient.

Insgesamt ist das Öffnungselement 6, insbesondere der Rahmenabschnitt 61 und der Deckelabschnitt 65 mit seinem Steckzapfen 66, aus einem Kunststoff gebildet.

Die Vorrichtung 1 umfasst zusätzlich einen Verschluss 7.

Der Verschluss 7 wird bevorzugt derart in den Durchgangsabschnitt 53 gesteckt (siehe Figur 1B), dass ein entsprechender Durchgangskanal des Durchgangsabschnitts 53 verschlossen ist.

Der Verschluss 7 weist einen Zapfen 71 auf, der in den Innenraum des Isolators 3 vorsteht und beispielsweise senkrecht zur Kanalachse KA des Durchgangskanals des Durchgangsabschnitts 53 einen rechteckigen Querschnitt aufweist. Der Zapfen 71 bildet einen Angreifabschnitt, an dem die Robotereinrichtung 2 den Verschluss 7 greift, um den Durchgangsabschnitt 53 zu öffnen, wie es im Folgenden erläutert wird.

Der Zapfen 71 ist axial hohl ausgeführt bzw. besitzt einen axial verlaufenden Hohlraum 72, der zur Verbindung mit dem Öffnungselement 6 dient.

Der Durchgangsabschnitt 53 besitzt bevorzugt eine Dichteinrichtung, die eingerichtet ist, den Verschluss 7 und das Öffnungselement 6 unabhängig voneinander lösbar zu halten. Insbesondere besitzt die Dichteinrichtung eine Blähdichtung 531 und eine weitere Dichtung 532, die ebenfalls bevorzugt eine Blähdichtung ist. Eine Druckluftleitung zur Versorgung der Blähdichtungen 531 und 532 verläuft bevorzugt durch den Verbindungsabschnitt 54 oder als gesonderte Leitung außerhalb des Verbindungsabschnittes 54 zu dem Durchgangsabschnitt 53.

Die Blähdichtung 531 ist eingerichtet, den Verschluss 7 lösbar zu halten. Wenn der Verschluss 7 in den Durchgangskanal des Durchgangsabschnitts 53 eingesetzt ist (Figur 1B) hält die Blähdichtung 531 den Verschluss 7 kraftschlüssig, indem die Steuerung die Blähdichtung 531 durch Einleiten von Druckluft expandiert und an eine in radiale Richtung weisende Außenoberfläche des Verschlusses 7 drückt.

Zum Lösen des Verschlusses 7 kontrahiert die Steuerung die Blähdichtung 531 durch Ausleiten der darin enthaltenen Druckluft.

Die weitere Dichtung bzw. weitere Blähdichtung 532 dient für das Verbinden mit dem Öffnungselement 6, was im Folgenden beschrieben wird.

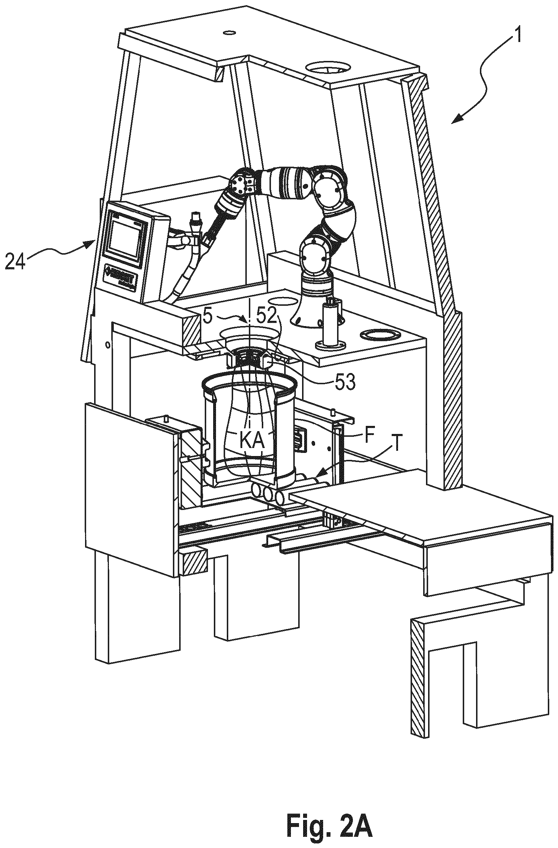

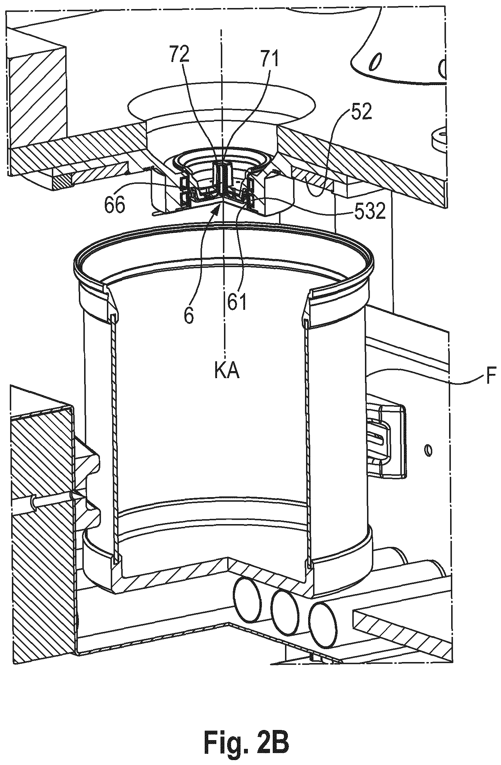

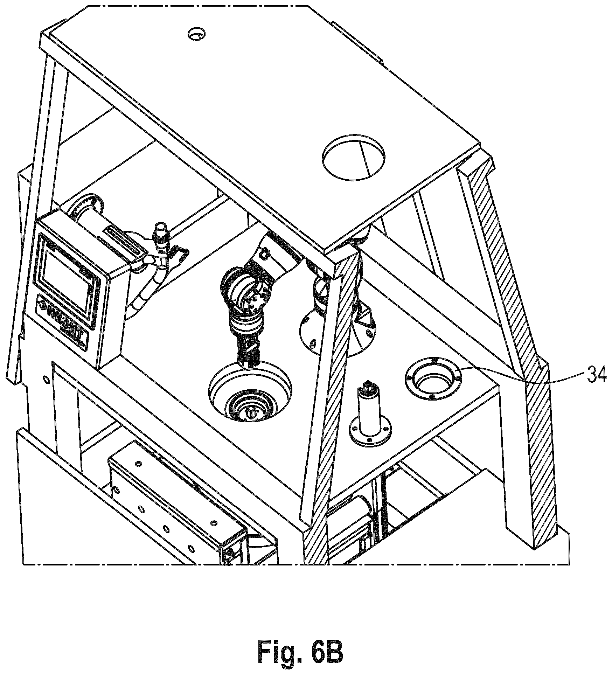

Unter Bezug auf die Figuren 2A, 2B bis 6A, 6B werden die Funktionen der erfindungsgemäßen Vorrichtung 1 beschrieben.

Die Ausgangssituation ist in Figuren 1A und 1B gezeigt, wobei die Transporteinrichtung T das Fass in die gezeigte Position gebracht hat. Der Deckel des Fass ist bereits entfernt, sodass sich das Öffnungselement 6 unterhalb des Andockabschnitts 5 befindet.

Nunmehr kann der Anwender das Öffnungselement 6 anheben und in den Durchgangsabschnitt 53 einführen. Dieser Vorgang kann auch automatisiert erfolgen, beispielsweise durch die externe Robotereinrichtung. Figuren 2A und 2B zeigen den erreichten Zustand.

Der Steckzapfen 66 des Deckelabschnitts 65 des Öffnungselements 6 wird in diesem Vorgang in den axialen Hohlraum 72 des Zapfen 71 gesteckt. Anschließend expandiert die Steuerung die Blähdichtung 532, die daraufhin radial zur Kanalachse KA des Durchgangsabschnitts 53 gegen die in radiale Richtung weisende Außenoberfläche des Rahmenabschnitt 61 drückt somit das Öffnungselement 6 ortsfest hält.

Die Steuerung 24 hebt nunmehr das Fass F mittels der Transporteinrichtung T soweit an, dass der Rand R an die Dichtmittel 52 angedrückt wird. Das mit dem Durchgangsabschnitt verbundene Öffnungselement 6 ist hiernach vollständig eingeschlossen.

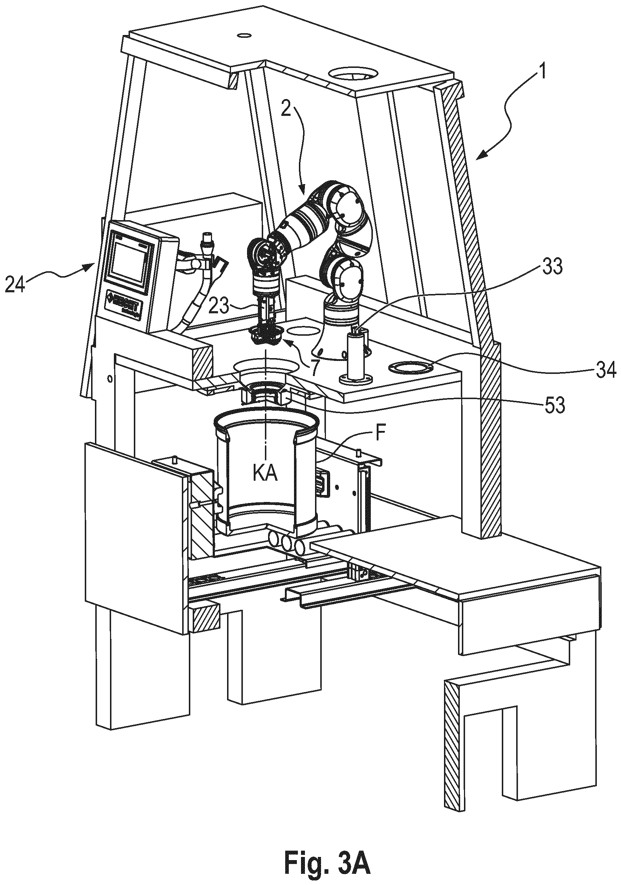

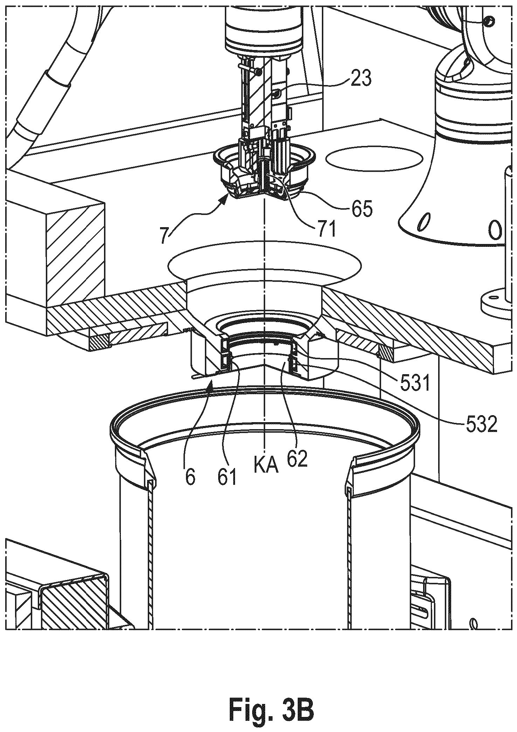

Der Funktionsablauf geht daraufhin zu Figuren 3A und 3B über.

Die Steuerung 24 steuert daraufhin die Robotereinrichtung 2 derart an, dass die Robotereinrichtung 2 den Zapfen 71 des Verschlusses 7 mit ihrem Greifer 23 ergreift und den Verschluss 7 von dem Durchgangsabschnitt 53 entfernt. Insbesondere sieht die Robotereinrichtung 2 den Verschluss 7 in Richtung der Kanalachse KA aus dem Durchgangskanal des Durchgangsabschnitts 53 heraus. Um dies durchführen zu können, kontrahiert die Steuerung 24 vorab die Blähdichtung 531. Die in Richtung der Kanalachse KA axial unterhalb der Blähdichtung 531 sitzende weitere Blähdichtung 532 verbleibt weiterhin expandiert und hält das Öffnungselement 3 weiterhin ortsfest.

Aufgrund der Tatsache, dass der Steckzapfen 66 des Deckelabschnitts 65 kraftschlüssig in dem Hohlraum 72 des Zapfens 71 sitzt, entfernt die Robotereinrichtung 2 den Deckelabschnitt 65 des Öffnungselements 6 zusammen mit dem Verschluss 7. Anzumerken ist an dieser Stelle, dass die Blähdichtung 532 nicht auf den Deckelabschnitt 65, sondern ausschließlich auf den Rahmenabschnitt 61 wirkt, wenn sie das Öffnungselement 6 ortsfest hält.

Die Robotereinrichtung 2 setzt den Verschluss 7 zusammen mit dem Deckelabschnitt 65 in die Parkposition 34, die in der Tischoberfläche 31 gebildet ist. Die Parkposition kann bevorzugt mit einer Blähdichtung versehen sein, um den Verschluss 7 zusammen mit dem Deckelabschnitt 65 vor einer Verunreinigung zu schützen.

Anschließend steuert die Steuerung 24 die Robotereinrichtung 2, so, dass sie das Schneidwerkzeug 33 mit ihrem Greifer 23 greift. Das Schneidwerkzeug 33 ist lediglich optional. Alternativ kann der Durchgang schon offen sein oder die im Folgenden beschriebene Förderleitung 4 mit einem Schneidelement versehen sein.

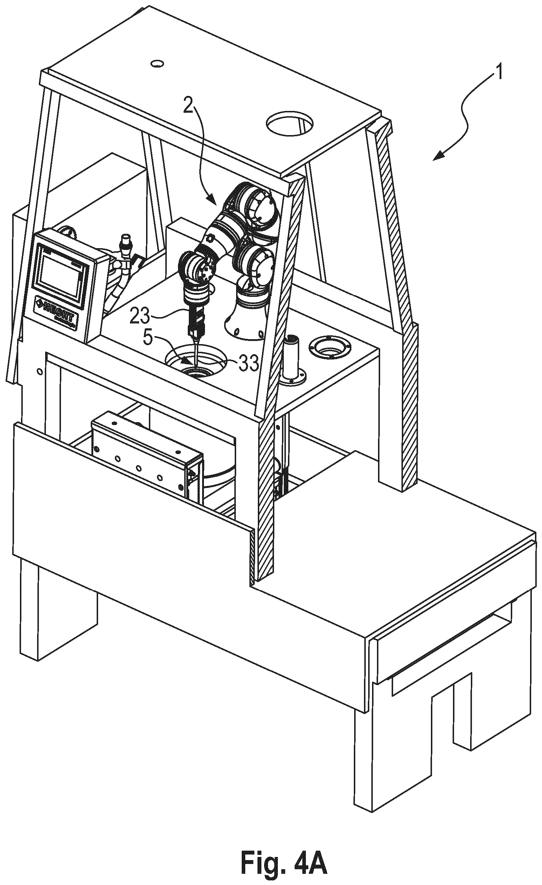

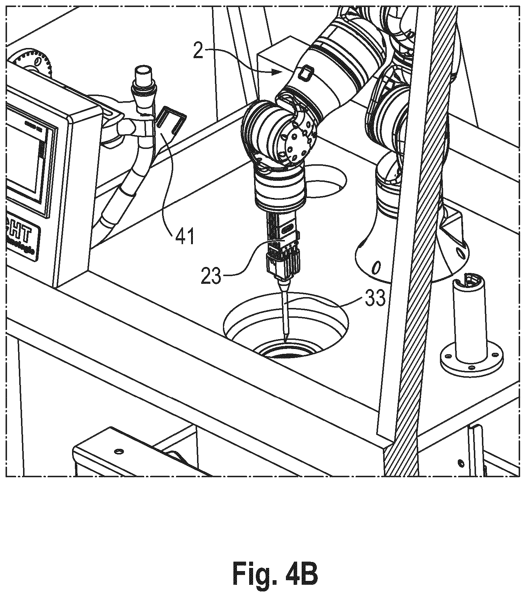

Der Funktionsablauf geht nachfolgend zu Figuren 4A und 4B über. Die Robotereinrichtung 2 bewegt das Schneidwerkzeug 33 über den Andockabschnitt 5 und von dort in den Durchgangsabschnitt 53.

Die den Durchgangskanal des Rahmenabschnitts 61 überspannende Klebefolie 62 (siehe Figur 3B) haftet an dem Innensack IS und verschließt den Rahmenabschnitt 61.

Um Zugang in einen Innenraum des Innensackes IS zu erlangen, durchtrennt die Robotereinrichtung 2 die den Durchgangskanal des Rahmenabschnitt 61 überspannende Klebefolie 62 mit dem Schneidwerkzeug 33. Gleichzeitig durchtrennt die Robotereinrichtung 2 hierbei den darunter anhaftenden Innensack IS, sodass der Innenraum des Innensackes IS für die Robotereinrichtung zugänglich ist.

Die Robotereinrichtung 2 legt anschließend das Schneidwerkzeug 33 zurück in die Werkzeughalterung.

Bevorzugt kann der Andockabschnitt 5 so ausgestaltet sein, dass in einem Zwischenraum zwischen Fass F und flexiblen Innensack IS ein Unterdruck erzeugt wird, der den Innensack IS an das Fass zieht.

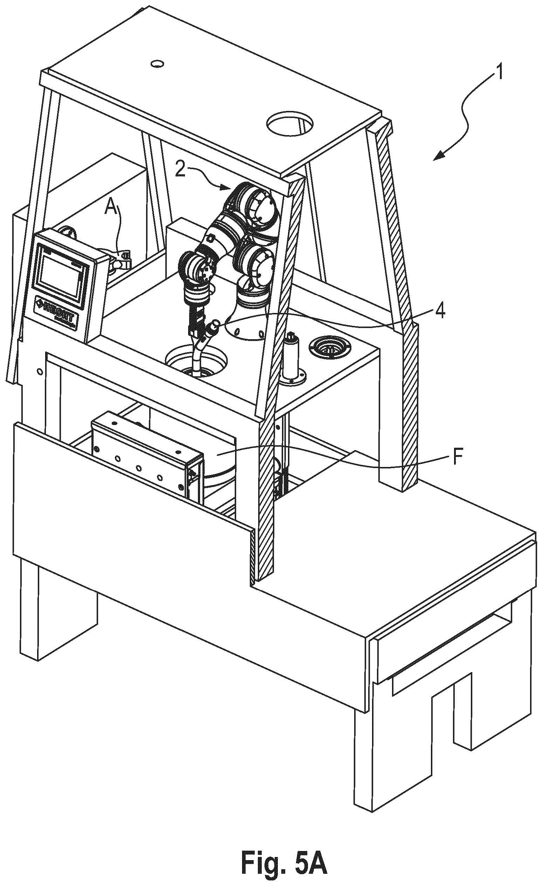

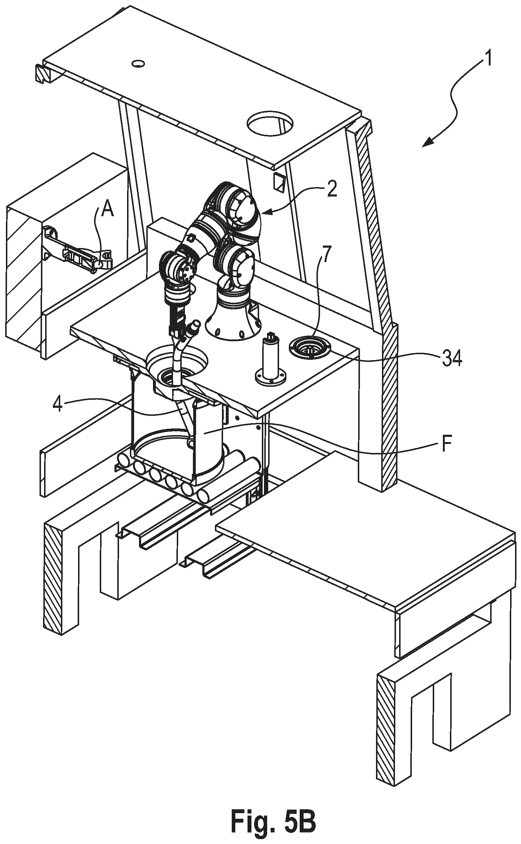

Der Funktionsaufrufablauf geht nunmehr zu Figuren 5A und 5B über. Die Robotereinrichtung 2 greift die Förderleitung 4 an einem Greifvorsprung 41 und löst sie von der Aufhängung A. Der guten Ordnung halber sei erwähnt, dass nicht die vollständige Förderleitung 4 in den Figuren gezeigt ist, sondern lediglich der Abschnitt, der in den Innenraum des Innensackes IS eingeführt wird.

Wie aus Figuren 5A und 5B ersichtlich ist, führt die Robotereinrichtung 2 die Förderleitung 4 in den Innenraum des Innensackes IS soweit ein, bis sie den Boden des Fasses F erreicht. Die Erfindung ist hierauf nicht beschränkt. Die Robotereinrichtung 2 führt die Förderleitung 4 so weit in den Innenraum des Innensackes ein, wie es notwendig ist.

Anschließend kann ein in dem Fass bzw. in dem Innenraum des Innensackes vorhandenes Schüttgut (nicht gezeigt) pneumatisch gefördert entnommen werden (Entleerung des Fasses F) oder pneumatisch in den Innenraum des Innensackes IS (Befüllung des Fasses F) geleitet werden.

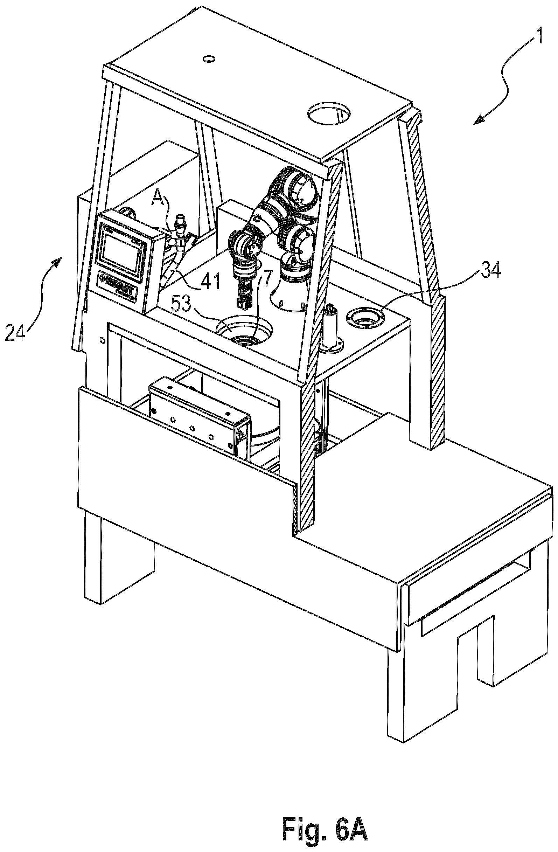

Wenn dieser Vorgang abgeschlossen ist, geht der Funktionsablauf zu Figuren 6A und 6B über.

Die Robotereinrichtung 2 hängt die Förderleitung 4 zurück in die Aufhängung A und ergreift anschließend den sich in der Parkposition 34 befindenden Verschluss 7.

Um das Öffnungselement 6 wieder lösen zu können, setzt die Robotereinrichtung 2 den Verschluss 7 zusammen mit dem darin eingesteckten Deckelabschnitt 65 wieder zurück in den Durchgangsabschnitt 53, wodurch der Zustand aus Figuren 2A und 2B erreicht wird. Die Steuerung 24 aktiviert dann die Blähdichtung 531, um den Verschluss 7 in dem Durchgangsabschnitt 53 zu sichern.

Das bevorzugt in dem Zwischenraum erzeugte Vakuum wird nunmehr abgeschaltet.

Die Steuerung 24 kontrahiert letztendlich nunmehr die Blähdichtung 532, wodurch sich der Rahmenabschnitt 61 des Öffnungselements 6 von dem Durchgangsabschnitt 53 und gleichzeitig der Steckzapfen 66 aus dem Hohlraum 72 des Zapfens 71 lösen lassen.

Der Funktionsablauf erreicht nunmehr den in Figuren 1A und 1B gezeigten Zustand.

Das handzuhabende Fass F kann nunmehr gewechselt werden.

Zu erwähnen ist, dass eine Außenoberfläche des Deckelabschnitts 65, auf der der Steckzapfen 66 gebildet ist, zu keinem Zeitpunkt in dem Innenraum des Isolators 3 freiliegt oder exponiert ist. Dies liegt daran, dass der Steckzapfen 66 soweit in den Hohlraum 72 eingeführt wird, dass die Außenoberfläche des Deckelabschnitts 65 mit einer nach außen weisenden Oberfläche des Verschlusses 7 in Anlage gebracht wird. Bevorzugt kann dieser Effekt noch verstärkt werden, indem zwischen Deckelabschnitt 65 und Verschluss 7 eine Dichtung angeordnet ist.

Folglich wird verhindert, dass sich Schüttgut auf der Außenoberfläche des Deckelabschnitts 65 angelagert und nach Lösen des Öffnungselements 6 in einer Außenumgebung des Isolators 3 verteilen kann.

Zusätzlich zu erwähnen ist, dass der Deckelabschnitt 65 mit dem Rahmenabschnitt 61 verriegelt werden kann, beispielsweise durch einen Bajonettverschluss. D. h. die Robotereinrichtung 2 dreht in dem Zustand aus Figuren 2A und 2B, in dem sich der Steckzapfen 66 in dem Hohlraum 72 befindet, den Deckelabschnitt 65 mittelbar über den Zapfen 71 zuerst und kann anschließend den Verschluss 7 zusammen mit dem Deckelabschnitt 65, wie unter Bezug auf Figuren 3A und 3B erläutert entfernen.

Weiterhin hervorzuheben ist, dass die Handhabung des Fasses F durch die Robotereinrichtung 2 vollständig kontaminationsfrei erfolgt.

Die Ausführungen vor der Figurenbeschreibung gelten für die Beschreibung der Ausführungsformen gleichermaßen und vice versa.

## Patentansprüche

1. Vorrichtung (1) zur Handhabung von Behältern (F) aufweisend:
eine Robotereinrichtung (2), die eingerichtet ist, (i) ein an/in einem Behälter (F) vorgesehenes Öffnungselement (6) derart zu bedienen, dass die Robotereinrichtung (2) über das Öffnungselement (6) Zugang in einen Innenraum des Behälters (F) hat, und (ii) den Behälter (F) über das Öffnungselement (6) anschließend zu befüllen und/oder zu entleeren.

2. Vorrichtung (1) nach Anspruch 1, weiterhin aufweisend:
einen Isolator (3), in dem die Robotereinrichtung (2) angeordnet ist und mit dem der Behälter (F) über einen Andockabschnitt (5) derart verbindbar ist, dass das Öffnungselement (6) für die Robotereinrichtung (2) zugänglich ist.

3. Vorrichtung (1) nach Anspruch 2, wobei
der Andockabschnitt (5) aufweist:
einen rigiden Plattenabschnitt (51), an den ein rigider Rand (R) des Behälters bestimmungsgemäß gedrückt wird, und
einen über ein, bevorzugt flexibles, Verbindungselement (54) mit dem Plattenabschnitt (51) verbundenen Durchgangsabschnitt (53), der mit dem Öffnungselement (6), das bestimmungsgemäß an einem flexiblen Innenbehältnis des Behälters (F) befestigt ist, lösbar verbindbar ist.

4. Vorrichtung (1) nach Anspruch 3, weiterhin aufweisend:
einen Verschluss (7), der den Durchgangsabschnitt (53) verschließt und einen Angreifabschnitt (71) besitzt, wobei
die Robotereinrichtung (2) eingerichtet ist, den Verschluss (7) an dem Angreifabschnitt (71) zum Öffnen des Durchgangsabschnittes (53) zu greifen.

5. Vorrichtung (1) nach Anspruch 4, wobei
der Durchgangsabschnitt (53) eine Dichteinrichtung besitzt, die eingerichtet ist, den Verschluss und das Öffnungselement (6) unabhängig voneinander lösbar zu halten,
die Robotereinrichtung (2) eingerichtet ist, nachdem der Durchgangsabschnitt (53) mit dem Öffnungselement (6) über die Dichteinrichtung verbunden ist, den Verschluss (7) und das Öffnungselement (6) derart zu bedienen, dass die Robotereinrichtung (2) über das Öffnungselement (6) den Zugang in den Innenraum innerhalb des flexiblen Innenbehältnisses des Behälters (F) hat.

6. Vorrichtung (1) nach Anspruch 5, wobei
die Dichteinrichtung eine Blähdichtung (531) und eine weitere Dichtung (532), die bevorzugt eine weitere Blähdichtung ist und in dem Durchgangsabschnitt (53) versetzt zu der Blähdichtung (531) angeordnet ist, aufweist, und
die Blähdichtung (531) eingerichtet ist, den Verschluss (7) lösbar zu halten, und die weitere Dichtung (532) eingerichtet ist, das Öffnungselement (6) zum Verbinden mit dem Behälter (F) lösbar zu halten.

7. Vorrichtung (1) nach Anspruch 6, wobei
die Robotereinrichtung (2) eingerichtet ist, den Verschluss (7) und das Öffnungselement (6) zusammen zu bedienen.

8. Zubehör, bevorzugt für eine Vorrichtung gemäß einem der Patentansprüche 1 bis 7, aufweisend:
eine Kombination aus einem Öffnungselement (6) und einem Verschluss (7), wobei
der Verschluss (7) bestimmungsgemäß einen Durchgangsabschnitt (53) verschließt und einen Angreifabschnitt (71) für eine Robotereinrichtung (2) besitzt, und das
Öffnungselement (6) einen Rahmenabschnitt (61), der bestimmungsgemäß an einem flexiblen Behältnis (IS) befestigt wird, und einen den Rahmenabschnitt (61) verschließenden Deckelabschnitt (65) mit einem Angreifabschnitt (66) für die Robotereinrichtung aufweist, wobei
der Angreifabschnitt (71) des Verschlusses (7) und der Angreifabschnitt (66) des Öffnungselementes (6) lösbar ineinandergreifen.
